Europäisches Patentamt

European Patent Office

Office européen des brevets

(11) Veröffentlichungsnummer: **0 385 144**
**A1**

## (12) EUROPÄISCHE PATENTANMELDUNG

(21) Anmeldenummer: **90102356.4**

(22) Anmeldetag: **07.02.90**

(51) Int. Cl.5: **F23G 7/14**

(30) Priorität: **28.02.89 DE 3906234**

(43) Veröffentlichungstag der Anmeldung:
**05.09.90 Patentblatt 90/36**

(84) Benannte Vertragsstaaten:
**AT CH DE LI NL**

(71) Anmelder: **Linde Aktiengesellschaft**
**Abraham-Lincoln-Strasse 21**
**D-6200 Wiesbaden(DE)**

(72) Erfinder: **Reichstein, Volkmar, Dipl.-Ing.**
**Höhenweg 26**
**D-4200 Oberhausen(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) Verfahren und Vorrichtung zur Sanierung kontaminierten Materials.

(57) Die Erfindung betrifft ein Verfahren und eine Vorrichtung zur Sanierung kontaminierten Materials 2, insbesondere Bodenmaterials. Das kontaminierte Material 2 wird auf eine Temperatur aufgeheizt, bei der die Kontaminationen in ihre flüchtigen Bestandteile überführt werden. Die Aufheizung des Materials 2 wird in einem Hohlraum 1 im Material 2 vorgenommen, insbesondere in einem in den Boden eingebrachten Rohr, z.B. mittels eines Brenners 4. Die flüchtigen Bestandteile werden aus dem umgebenden Material 2 in den Hohlraum 1 überführt, wo sie katalytisch in unschädliche Produkte umgewandelt werden. Die unschädlichen Produkte werden aus dem Hohlraum 1 abgezogen und an die Atmosphäre abgegeben.

EP 0 385 144 A1

## Verfahren und Vorrichtung zur Sanierung kontaminierten Materials

Die Erfindung betrifft ein Verfahren zur Sanierung kontaminierten Materials, insbesondere Bodenmaterials, bei dem das kontaminierte Material auf eine Temperatur aufgeheizt wird, bei der die Kontaminationen in ihre flüchtige Bestandteile überführt werden, wobei die Aufheizung in mindestens einem Hohlraum im Material durch im Hohlraum freigesetzte Wärme vorgenommen wird und die flüchtigen Bestandteile aus dem umgebenden Material in den jeweiligen Hohlraum überführt werden, von wo sie schließlich aus dem Material abgeführt werden. Gegenstand der Erfindung ist ferner eine Vorrichtung zur Durchführung des Verfahrens.

Es ist hinreichend bekannt, daß mit Schadstoffen stark belastete Böden auf Fabrikgeländen, Mülldeponien etc. eine große Gefahr für die Umwelt darstellen. Bspw. können Schadstoffe in das Grundwasser gelangen und so die Trinkwasserversorgung großer Bevölkerungsteile gefährden. Insbesondere die Sanierung von Sondermülldeponien, deren Böden teilweise extrem hohe Schadstoffkonzentrationen aufweisen, stellt ein dringendes Problem dar. Oft sind auch größere Geländeabschnitte z.B mit Kohlenwasserstoff-Verbindungen verunreinigt, so daß großräumige Sanierungsmaßnahmen erforderlich sind.

Auch die Dekontamination von schadstoffhaltigen Klärschlämmen, Sanden und vergleichbaren Feststoffaggregaten bzw. Rückständen stellt ein zunehmendes Problem dar.

Eine bekannte Methode, kontaminiertes Material zu sanieren, ist die sogenannte thermische Entsorgung, wobei das kontaminierte Material auf eine Temperatur aufgeheizt wird, bei der die Kontaminationen in ihre flüchtigen Bestandteile überführt werden.

Auf diese Weise werden z.B. schadstoffbelastete Erdböden saniert. Dabei werden Rohre, in denen jeweils ein Brenner installiert ist, in Erdbohrungen eingebracht. Die Rohre erwärmen das Erdreich soweit, daß die Kontaminationen verdampfen. Die Dämpfe werden über Zufuhröffnungen aus dem umgebenden Erdreich in das Rohr aufgenommen und zur Erdoberfläche geleitet, wo sie gesammelt und entsorgt werden können.

Aufgrund der notwendigen Nachreinigung der abgezogenen Dämpfe ist diese Methode apparativ aufwendig und wenig flexibel. Bei einem Standortwechsel muß auch die Nachreinigungseinrichtung transportiert werden. Entfällt die Nachreinigung, so werden schadstoffbelastete Dämpfe an die Umwelt abgegeben, so daß es sich im Grunde nicht um eine Entsorgung, sondern lediglich um eine Verlagerung von einem Abfall- zu einem Abgasproblem handelt.

Der vorliegenden Erfindung liegt daher die Aufgabe zugrunde, ein Verfahren der eingangs genannten Art sowie eine Vorrichtung zur Durchführung des Verfahrens so auszugestalten, daß eine effektive und wirtschaftliche Sanierung des kontaminierten Materials erreicht wird und auf eine Nachreinigung verzichtet werden kann.

Diese Aufgabe wird erfindungsgemäß dadurch gelöst, daß die flüchtigen Bestandteile in dem Hohlraum katalytisch in unschädliche Produkte umgewandelt werden.

Die in ihre flüchtigen Bestandteile überführten Kontaminationen werden also bereits vor deren Abzug aus dem Material katalytisch umgewandelt, so daß schließlich unschädliche Stoffe aus dem Material austreten. Eine nachgeschaltete zusätzliche Reinigung der aus dem Material abgezogenen Stoffe entfällt daher. Bei der katalytischen Umwandlung evtl. entstehende Umwandlungsenergie trägt zur Aufheizung des kontaminierten Materials bei.

Vorzugsweise wird die im Hohlraum freigesetzte Wärme durch Verbrennen eines Gases, insbesondere eines Erdgas-Luft-Gemisches erzeugt. Um unabhängig von öffentlichen Erdgasnetzen zu sein, kann auch ein Propan-Luft-Gemisch verwendet werden.

Zusätzlich kann in den Hohlraum ein Reaktionsgas eingespeist werden, das die Umwandlung der flüchtigen Bestandteile in unschädliche Produkte fördert. Hierfür kommen bspw. Sauerstoff, Propan oder Ammoniak in Frage. Durch Zudosierung derartiger Komponenten kann die Umwandlung gezielt beeinflußt werden. Bspw. kann durch Ammoniak-Zugabe bei Wahl eines geeigneten Katalysators ein Abbau von Nitriten bzw. Nitraten erzielt werden.

In dem Hohlraum wird eine Temperatur aufrechterhalten, die einerseits eine ausreichende Überführung der Kontaminationen in ihre flüchtigen Bestandteile und andererseits eine günstige Arbeitstemperatur des Katalysators sicherstellt. Vorzugsweise liegt diese Temperatur bei 500 °C bis 1200 °C.

Zur Sanierung kontaminerten Erdreichs werden zweckmäßigerweise mehrere Rohre in Erdbohrungen eingebracht. In den Rohren sind Brenner installiert, die das umgebende Erdreich soweit erwärmen, daß die Kontaminationen verdampfen. Die Dämpfe werden über Zufuhröffnungen in das Rohr aufgenommen und durch einen im Rohr angebrachten Katalysator geleitet. Im Katalysator werden die Dämpfe in unschädliche Produkte umgewandelt, die schließlich zur Erdoberfläche geleitet werden.

Die Erfindung eignet sich außer zur Sanierung von an seinem Ort belassenen Boden auch zur Reinigung von ausgehobenem Erdreich, kontaminiertem Klärschlamm, schadstoffbelastetem Abfall und vergleichbaren Feststoffaggregaten bzw. Rückständen. In diesen Fällen wird das kontaminerte Material aufgeschüttet. In der Schüttung werden Hohlräume gebildet, in denen Wärme freigesetzt wird, so daß das umgebende Material aufgeheizt wird. Dabei werden die Kontaminationen in ihre flüchtigen Bestandteile überführt und in die Hohlräume aufgenommen. In den Hohlräumen werden die flüchtigen Bestandteile katalytisch in unschädliche Produkte umgewandelt, die schließlich zur Oberfläche der Schüttung geleitet werden.

Zweckmäßigerweise werden Rohre in die Schüttung eingebracht. In den Rohren sind Brenner angeordnet, die zur Wärmefreisetzung dienen. Außerdem sind Katalysatoren in den Rohren installiert, die die Umwandlung der flüchtigen Bestandteile bewirken.

Eine Vorrichtung zur Durchführung des Verfahrens besteht aus mindestens einem in das kontaminerte Material eingeführten Rohr, in dem ein Brenner, insbesondere Gasbrenner angeordnet ist, wobei das Rohr mindestens eine Zufuhrleitung für Brennstoff, insbesondere Brenngas und mindestens eine außerhalb des Materials endende Abgasableitung sowie mindestens eine Zuführung für die flüchtigen Bestandteile aufweist.

Diese Vorrichtung ist erfindungsgemäß dadurch gekennzeichnet, daß innerhalb des Rohres mindestens ein Katalysator zur Umwandlung der flüchtigen Bestandteile angeordnet ist.

Soll an seinem Ort belassener Boden saniert werden, so ist das Rohr vorzugsweise in einem Bohrloch angeordnet, das in dem kontaminierten Erdreich angebracht wurde.

Gilt es dagegen, ausgehobenes Erdreich, Klärschlamm, Abfall etc. zu dekontaminieren, so ist das Rohr zweckmäßigerweise in einer Schüttung des kontaminerten Materials angeordnet.

Die Erfindung bietet eine Reihe von Vorteilen. Durch den Wegfall von Nachreinigungsstufen können Investitionen für nachgeschaltete Abgasreinigungsanlagen eingespart werden. Da sowohl Verbrennungsenergie als auch Umwandlungsenergie zur Aufheizung des kontaminerten Materials zur Verfügung stehen, können Betriebskosten gesenkt werden. Außerdem verringert sich der Montageaufwand pro Sanierungsort, da die Erfindung mit weniger Anlagenkomponenten auskommt.

Durch Wahl verschiedener Katalysatortypen ist eine Anpassung an unterschiedliche Verunreinigungen möglich. Die Anpassungsfähigkeit wird durch Zugabe von speziellen Reaktionsgasen noch erhöht.

Im folgenden soll die Erfindung anhand eines in einer Zeichnung schematisch dargestellten Ausführungsbeispiels näher erläutert werden.

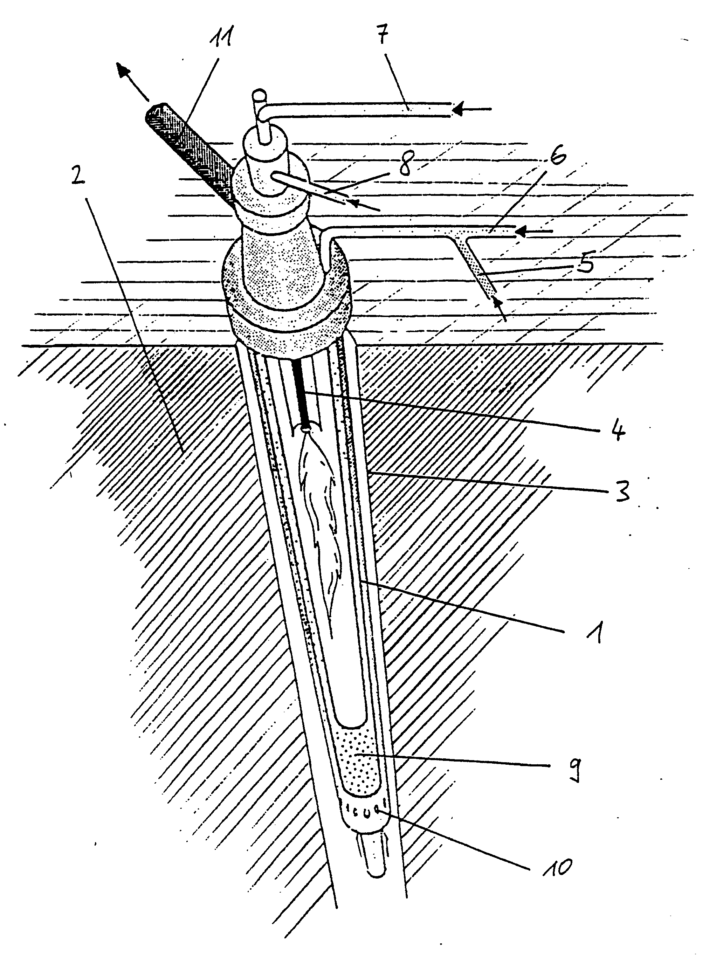

Die Figur zeigt ein in kontaminertes Erdreich eingebrachtes Rohr mit einem darin angeordneten Brenner und Katalysator.

Im vorliegenden Ausführungsbeispiel soll an seinem Ort belassener Boden dekontaminiert werden. Hierzu werden in dem kontaminierten Boden 2 mehrere Bohrungen vorgenommen. Von den entstehenden Bohrlöchern 3 ist in der Figur eines gezeigt. In das Bohrloch 3 wird das Rohr 1 eingebracht. Im Rohr 1 ist ein Gasbrenner 4 angeordnet, der über Leitungen 5 und 6 bzw. 7 und 8 mit Erdgas und Luft versorgt wird. Außerdem ist im Inneren des Rohres 1 ein Katalysator 9 angeordnet.

Mittels des Brenners 4 wird das das Rohr 1 umgebende Bodenmaterial 2 soweit erhitzt, daß die Bodenverunreinigungen verdampfen. Die Dämpfe werden über Öffnungen 10 in das Rohr 1 aufgenommen und von dem Katalysator 9 in unschädliche Produkte umgewandelt, die in dem Rohr 1 zur Erdoberfläche geleitet werden. Am oberen Ende des Rohres 1 ist eine Abgasableitung 11 angebracht, über die die unschädlichen Umwandlungsprodukte an die Atmosphäre abgegeben werden. In die Abgasableitung 11 kann ein, in der Figur nicht dargestellter, Ventilator eingeschaltet sein, der die Umwandlungsprodukte aus dem Rohr 1 abzieht.

**Ansprüche**

1. Verfahren zur Sanierung kontaminierten Materials, insbesondere Bodenmaterials, bei dem das kontaminierte Material auf eine Temperatur aufgeheizt wird, bei der die Kontaminationen in ihre flüchtigen Bestandteile überführt werden, wobei die Aufheizung in mindestens einem Hohlraum im Material durch im Hohlraum freigesetzte Wärme vorgenommen wird und die flüchtigen Bestandteile aus dem umgebenden Material in den jeweiligen Hohlraum überführt werden, von wo sie schließlich aus dem Material abgeführt werden, dadurch gekennzeichnet, daß die flüchtigen Bestandteile in dem Hohlraum (1) katalytisch in unschädliche Produkte umgewandelt werden.

2. Verfahren nach Anspruch 1, dadurch gekennzeichnet, daß die im Hohlraum freigesetzte Wärme durch Verbrennen eines Gases, insbesondere eines Erdgas-Luft-Gemisches bzw. Propan-Luftgemisches, erzeugt wird.

3. Verfahren nach Anspruch 1 oder 2, dadurch gekennzeichnet, daß in den Hohlraum (1) mindestens ein Reaktionsgas eingespeist wird, das die Umwandlung der flüchtigen Bestandteile in unschädliche Produkte fördert.

4. Verfahren nach einem der Ansprüche 1 bis 3, dadurch gekennzeichnet, daß in dem Hohlraum (1) eine Temperatur von ca 500 °C bis ca 1200

° C aufrechterhalten wird.

5. Vorrichtung zur Durchführung des Verfahrens nach einem der Ansprüche 1 bis 3 mit mindestens einem in das kontaminierte Material eingeführten Rohr, in dem ein Brenner, insbesondere Gasbrenner, angeordnet ist, wobei das Rohr mindestens eine Zufuhrleitung für Brennstoff, insbesondere Brenngas, und mindestens eine außerhalb des Materials endende Abgasableitung sowie mindestens eine Zuführung für die flüchtigen Bestandteile aufweist, dadurch gekennzeichnet, daß innerhalb des Rohres (1) mindestens ein Katalysator (9) zur Umwandlung der flüchtigen Bestandteile angeordnet ist.

6. Vorrichtung nach Anspruch 5, dadurch gekennzeichnet, daß das Rohr (1) in einem Bohrloch (3) in kontaminiertem Erdreich (2) angeordnet ist.

7. Vorrichtung nach Anspruch 5, dadurch gekennzeichnet, daß das Rohr (1) in einer Schüttung des kontaminierten Materials angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 716 275 (WESTFÄLISCHE BERGEWERKSCHAFTSKASSE) * Spalte 1, Zeilen 1-15; Spalte 3, Zeile 58 - Spalte 4, Zeile 55; Figur * --- | 1-7 | F 23 G 7/14 |
| Y | EP-A-0 175 081 (DIDIER-WERKE) * Ansprüche 1-3 * --- | 1-7 | |
| A | DE-A-3 318 796 (H. LINN) * Seite 5, Zeile 25 - Seite 6, Zeile 25; Seite 7, Zeilen 9-13; Figur * --- | 1,4,5 | |
| A | FR-A-2 288 942 (UNIVERSAL OIL PRODUCTS) * Seite 3, Zeile 15 - Seite 4, Zeile 18; Figuren 1,2 * --- | 1,5 | |
| A | WO-A-8 701 312 (F. MANCHAK) * Seite 2, Zeilen 21-29; Seite 18, Zeilen 4-32; Seite 20, Zeilen 4-10; Figur 5 * ----- | 1,5 | |

**RECHERCHIERTE SACHGEBIETE (Int. Cl.5)**

B 09 B
F 23 G

Der vorliegende Recherchenbericht wurde für alle Patentansprüche erstellt

| Recherchenort | Abschlußdatum der Recherche | Prüfer |
|---|---|---|
| DEN HAAG | 30-05-1990 | LAVAL J.C.A |